# EUROPÄISCHE PATENTSCHRIFT

(11) **EP 3 919 408 B1**
(45) Veröffentlichungstag und Bekanntmachung des Hinweises auf die Patenterteilung: **13.03.2024**
(21) Anmeldenummer: 20178455.0
(22) Anmeldetag: 05.06.2020
(51) Int. Cl.: B65D 51/16, B65D 53/04, B65D 41/04

(54) **KAPPEN MIT SICHERHEITSFUNKTION GEGEN ÜBERDRUCK**
CAPS WITH SAFETY FUNCTION AGAINST OVERPRESSURE
CAPUCHONS À FONCTION DE PROTECTION CONTRE LA SURPRESSION

(43) Veröffentlichungstag der Anmeldung: 08.12.2021
(73) Patentinhaber: LANXESS Deutschland GmbH, 50569 Köln (DE)
(72) Erfinder: VOGL, Erasmus, 51429 Bergisch Gladbach (DE); TAUPP, Marcus, 51519 Odenthal (DE)

(56) Entgegenhaltungen:
- US-A- 2 542 741
- US-A- 2 602 559
- US-A- 2 946 471

## Beschreibung

Die Erfindung betrifft eine Kappe zum Verschließen von Behältern umfassend zumindest ein Gitter, ein geschäumtes Polymer und mindestens ein weiteres Polymer und Behälter, die mit der erfindungsgemäßen Kappe ausgestattet sind.

In geschlossenen, insbesondere blickdichten, aber auch transparenten Behältern, wie sie beispielsweise zum Transport und der Lagerung von Chemikalien verwendet werden, besteht für den Zwischen- oder Endverbraucher oftmals der Wunsch etwaigen Überdruck, welcher sind in den Behältern bilden kann, zu vermeiden. Überdruck kann insbesondere entstehen, wenn die Substanzen länger gelagert wurden oder wenn erhöhte Temperaturbelastung die Lagerung beeinträchtigen konnte.

Dies ist in all den Fällen von entscheidender sicherheitstechnischer Bedeutung, in denen sich zum Beispiel über den Lagerzeitraum bzw. den Transport unerwünschte Veränderungen im Behälter ergeben können. Beispielsweise gibt es viele Chemikalien oder Stoffmischungen, welche sich tendenziell zersetzen können und dabei gasförmige Substanzen abgeben können. Auch ein Zerfall der Stoffe oder Stoffmischungen selbst, in unter Standardbedingungen gasförmige Substanzen, ist bekannt. Die entstehenden Gase können nicht entweichen, denn die Behälter müssen dicht verschlossen sein, beispielsweise um den gefahrlosen Transport sicherzustellen. Je nach Situation besteht damit die Möglichkeit, dass sich durch die angesammelten Gase der Innendruck in dem Behälter erhöht. Der unkontrollierte und unbekannte Innendruck führt dann zu einer Reihe unerwünschter Effekte.

Beispielsweise kommt es beim Öffnen zu einer schlagartigen Entspannung. Dies wiederum kann dazu führen, dass die im Behälter befindliche Substanz, wenn es eine Flüssigkeit ist, mitgerissen wird, ungewollt in die Umgebung austritt und Personen und Gegenstände verunreinigt.

Weiter kann durch die ungewollte spontane Expansion der angesammelten Gase, während des Vorgangs der Öffnung, ein Gegenstand, beispielsweise der Verschluss selbst, stark beschleunigt werden und Personen oder Objekte im Umfeld verletzen.

Weiter kann durch den sich aufbauenden Innendruck eine im Behälter befindliche Flüssigkeit stark mit Gas gesättigt sein. Durch die Entspannung während des Öffnens kann dies beispielsweise zu schlagartigem Schäumen mit vehementem Substanzaustritt führen.

Weiter kann durch den sich aufbauenden Innendruck auch ohne den Vorgang des Öffnens die mechanische Stabilität des Behälter und der jeweiligen Verpackung in Mitleidenschaft gezogen werden. Der Behälter kann sich unerwünscht verformen oder sogar bersten. Durch die mechanische Beschleunigung der Stücke, während des Berstens, sind weitere Verletzungen möglich, was beispielweise bei Glasbehältern und daraus folgenden Glassplittern sehr leicht zu weitergehenden und ernsten Verletzungen von Personen führen kann.

Die einfachste aus dem Stand der Technik bekannte Vorrichtung, um Überdruck einfach und sicher zu vermeiden, sind an die Behälter angebrachte Berstscheiben. Diese werden in unterschiedlichsten Ausführungen, beispielsweise von der Firma Fike Deutschland, Innstrasse 28, 68199 Mannheim, vertrieben. Leider wird hier bei erhöhtem Druck die Integrität der Behälter aufgegeben, insofern als die Scheiben nachgeben und zerbrechen. Dadurch besteht die Gefahr, dass der chemische, gegebenenfalls toxische Inhalt, freigesetzt wird. Außerdem sind Berstscheiben aufwendig in der Herstellung. Weiter ist die Einarbeitung der Berstscheibe in bestehende Verpackungslösungen oft sehr aufwendig und für viele der eingesetzten Gebinde für Flüssigkeiten in Flaschenform mit Schraubkappe, aus Kostengründen, nicht auf dem Markt verfügbar.

Für größere Behältnisse, beispielsweise Tanks, sind nach dem Stand der Technik Überdruckventile bekannt, welche ohne die Integrität der Behältnisse aufzugeben, eine sichere Druckentlastung erlauben. Allerdings sind konstruktionsbedingt derartige Überdruckventile für kleinere Gebinde, wie beispielsweise transparente Flaschen aus Polyethylenterephtalat zu 250, 330, 500, 1000 oder 2000 ml, wie sie in der Getränkeindustrie verwendet werden, nicht bekannt, da diese nur mit einfachen Schraubkappen aus Polythethylen oder Polypropylen verschlossen werden und diese für Überdruckventile konstruktiv nicht einfach eingefügt werden können. Ebenso sind auch für Aluminumflaschen oder Glasflaschen mit Schraubverschluss aus Kunststoff keine einfachen Lösungen mit Überdruckventilen bekannt.

Aus der US-B 4121728 ist eine Entlüftungsauskleidung aus geschäumten Polymeren und zwei undurchlässigen Kunststoffschichten bekannt, deren Oberfläche strukturiert ist und z.B. Einkerbungen aufweisen kann. Diese laminierten Kunststoffformen werden dann in runde Plättchen gestanzt und in einer Verschlusskappe angebracht. Die Entlastung bei Überdruck erfolgt jetzt dadurch, dass durch die aufgeprägten Strukturen Hohlräume entstanden sind, die zur Druckableitung genutzt werden und zum Druckausgleich über das Gewinde führen. Diese Form der Entlüftung eignet sich nur zur Entspannung höhere Drücke. Zudem erfordert die Herstellung der Kunststoffschichten technisch aufwendige Prozesse und ist daher nicht ökonomisch.

US 2 542 741 A zeigt eine Dichtungsscheibe mit einer Membran 13, die sich unter Innendruck in Hohlräume 12 hinter der Membran biegt und dadurch Entlüftungskanäle schafft.

Es bestand daher die Aufgabe ohne konstruktive Veränderung bestehender Kunststoff, Glas oder Metallflaschen, welches mit Schraubverschlüssen flüssigkeitsdicht verschlossen werden, ein Verschlusssystem zu finden, welche ein Entweichen von Überdruck erlauben würde.

Überraschend wurde nun ein Verschlusssystem gefunden, mit dem die Nachteile des Standes der Technik überwunden werden können ohne die Verwendung von technisch aufwendigen und schlecht handhabbaren zusätzlichen Bauteilen. Insbesondere erlaubt die Konstruktion die besonders wichtige Anpassung an die erforderlichen Druckverhältnisse.

Gegenstand der Erfindung ist daher eine Kappe mit Schraubgewinde zum Verschließen eines Behälters, umfassend zumindest ein Gitter, dass in der Kappe auf die Kappeninnenwand aufgebracht ist, und mindestens eine geschäumte Polymerschicht, welche auf das Gitter aufgebracht ist und mindestens eine weitere Polymerschicht die auf die geschäumten Polymerschicht aufgebracht ist und die Behälteröffnung verschließt.

Die Kappe besteht vorzugsweise aus Polymeren oder Metall. Als Metalle, aus denen die Kappen bestehen können, werden vorzugsweise Edelstahl und Aluminium verwendet. Als Polymere, aus denen die Kappen bestehen können, werden vorzugsweise Polyethylenterephthalat (PET), Polypropylen (PP) oder Polyethylen (PE) oder Mischungen dieser Polymere eingesetzt. Besonders bevorzugt besteht die Kappe aus optisch transparentem, opaken oder eingefärbten Polyethylenterephthalat (PET), Polypropylen (PP) oder Polyethylen (PE) oder Mischungen dieser Polymeren. Noch weiter bevorzugt besteht die Kappe aus Polyethylen. Die Herstellung von Kappen der genannten Art, ist dem Fachmann bekannt. Beispielsweise sind Kappen aus Polyethylenterephthalat (PET), Polypropylen (PP) oder Polyethylen (PE) im Handel erhältlich.

Die Kappe an sich, ohne den erfindungsgemäßen Einsatz mit zumindest einem Gitter, dass in der Kappe auf die Kappeninnenwand aufgebracht ist, und mindestens eine geschäumte Polymerschicht, welche auf das Gitter aufgebracht ist und mindestens eine weitere Polymerschicht an der die geschäumten Polymerschicht aufgebracht ist und die Behälteröffnung verschließt, ist eine handelsübliche Kappe bzw. ein Deckel mit Schraubverschluss. Die Begriffe Kappe mit Schraubverschluss und Deckel mit Schraubverschluss werden im Sinne der Erfindung synonym verwendet.

Die Kappe weist ein Schraubgewinde auf mit dem sie auf die Öffnung des Behälters aufgeschraubt werden kann.

Die Kappe kann vorzugsweise auch durch Sicherheitsringe modifiziert sein. Sicherheitsringe dienen zum Anzeigen einer Erstöffnung einer Flasche und sind zum Beispiel aus der WO-A-9213773 bekannt. Sicherheitsringe bestehen vorzugsweise aus dem Material aus dem auch die Kappe besteht.

Bei dem Behälter handelt es sich vorzugsweise um Flaschen. Die Behälter weisen vorzugsweise ein Volumen von 250, 330, 500, 1000, 2000, 6000, 10000 ml oder 40000 ml auf. Besonders bevorzugt weisen die Behälter ein Volumen von 2000 ml bis 40000 ml auf. Der Behälter kann aus Polymeren, wie vorzugsweise Polyethylenterpthalat, Polypropylen oder Polyethylen, oder aus Metall, wie vorzugsweise Aluminium und Edelstahl oder aus Glas bestehen. Besonders bevorzugt besteht der Behälter mindestens zu 95 Gew. % aus Aluminium bezogen auf das Gesamtgewicht des Behälters ohne Verschluss, oder aus Glas. Die Erfindung betrifft ebenfalls den Behälter umfassend die erfindungsgemäße Kappe. Vorzugsweise wird der Behälter mit der erfindungsgemäßen Kappe zum Transport und der Lagerung von Chemikalien, besonders bevorzugt zum Transport und Lagerung von flüssigem Dimethyldicarbonat verwendet. Es hat sich zudem gezeigt, dass gerade auch bei nur teilweise gefüllten Behältern, die Druckableitung mit der erfindungsgemäßen Kappe überzeugend funktioniert.

Daher ist von der Erfindung ebenfalls ein Behälter mit der erfindungsgemäßen Kappe umfasst, bei dem der Behälter teilweise oder vollständig mit flüssigem Dimethyldicarbonat gefüllt ist. Bevorzugt ist der Behälter teilweise befüllt.

Das Gitter kann sowohl formstabil sein als auch elastomere Eigenschaften aufweisen. Es kann beispielsweise auch aus geschäumtem Polymeren bestehen.

Das Gitter besteht vorzugsweise aus Polymeren oder Metall. Als Metalle, aus denen das Gitter bestehen kann, werden vorzugsweise Edelstahl und Aluminium verwendet. Als Polymere, aus denen das Gitter bestehen kann, werden vorzugsweise Polyethylenterephthalat (PET), Polypropylen (PP), Polyethylen (PE), Polycarbonat oder Polytetrafluorethylen (PTFE) oder Mischungen dieser Polymere eingesetzt. Besonders bevorzugt besteht das Gitter aus Polypropylen (PP) oder Polyethylen (PE) oder Mischungen dieser Polymeren.

Die Gitterstreben des Gitters können rechteckig oder rund geformt sein oder eine andere Form aufweisen. Die Gitterstreben des Gitters weisen bevorzugt eine runde Form auf.

Die Gitterstreben können senkrecht zueinander angeordnet sein, können aber auch andere Winkel aufweisen, wie beispielsweise und vorzugsweise 55° bis 65 °, 85 ° bis 95° oder 110 ° bis 130°. Besonders bevorzugt sind die Gitterstreben in einem Winkel von 85 ° bis 95° zueinander angeordnet.

Vorzugsweise haben die Gitterstreben des Gitters eine Breite von 0.2 mm bis 5 mm und eine Höhe von 0.2 mm bis 5 mm, falls es sich um im Wesentlichen rechteckige Gitterstreben handelt. Besonders bevorzugt haben die Gitterstreben des Gitters eine Breite von 0.5 mm bis 2 mm hat und eine Höhe von 0.5 mm bis 2 mm, falls es sich um im Wesentlichen rechteckige Gitterstreben handelt. Vorzugsweise weisen beide Gitterstreben im Rahmen einer Fehlerbreite von 5 %, die gleiche Breite und Höhe auf. Vorzugsweise haben die Gitterstreben des Gitters einen Durchmesser von 0.2 mm bis 5 mm, besonders bevorzugt einen Durchmesser von 0.5 mm bis 2 mm auf, falls es sich im Wesentlichen um runde Gitterstreben handelt. Der Abstand der Gitterstreben beträgt vorzugsweise 2 mm bis 20 mm. Vorzugsweise ist das Verhältnis zwischen dem Durchmesser der Gitterstrebe und dem Raum zwischen den Gitterstreben 1 : 7 bis 1 :12. Vorzugsweise handelt es sich bei dem Gitter um ein Polyethylengitter mit runden Gitterstreben mit einem Durchmesser von 2 mm und einem Abstand von 10 mm, die rechtwinkelig zueinander ausgerichtet sind.

Das Gitter kann auf unterschiedliche Arten hergestellt werden. Beispielsweise können Gitter aus Polymeren durch einen Extrusionsprozess hergestellt werden. Weiterhin können polymere Gitter durch einen Walzprozess mit entsprechend geformten Walzen hergestellt werden. Des Weiteren können polymere Gitter durch einen Fräsprozess aus einer Kunststoffschicht hergestellt werden. Ein Web oder Verklebprozess ist ebenso geeignet. Gitter aus Polymeren sind beispielsweise gewerblich erhältlich von HaGa-Welt GmbH & Co. KG, Lange Str. 5, 31171 Nordstemmen, Deutschland. Gitter aus Metallen können beispielsweise durch Guss- oder Drahterodierungsverfahren hergestellt werden.

Vorzugsweise besitzt das Gitter eine runde Form um im Wesentlichen passgenau an die Kappeninnenwand angepasst werden zu können. Vorzugsweise ist der Durchmesser des Gitters 2 cm bis 10 cm. Besonders bevorzugt ist der Durchmesser des Gitters 6.6 cm +/- 0,2 cm. Besonders bevorzugt weist das Gitter Gitterstreben mit einem Durchmesser von 2 mm +/- 0,1 mm mit einem Gitterabstand von 10 mm +/- 0,5 mm auf. Das Gitter könnte eine Randbegrenzung aufweisen, damit es dicht mit der Kappeninnenwand abschließen kann. Diese Randbegrenzung besteht vorzugsweise aus dem selben Polymeren, aus dem das Gitter besteht. Vorzugsweise besitzt das Gitter keine solche Randbegrenzung.

"Wesentlichen" bedeutet im Sinne der vorliegenden Erfindung, dass die Größendifferenz zwischen zwei zu vergleichenden Bauteilen nicht mehr als 5 %, bevorzugt nicht mehr als 1 %, abweichen.

Geeignete geschäumte Polymere, aus denen die geschäumte Polymerschicht bestehen kann, sind vorzugsweise Polypropylen, Polyethylen, High Density Polyethylen (HDPE), Low Density Polyethylen (LDPE), High Density Polypropylen (HDPP) oder Low Density Polypropylen (LDPP), Polyethylenterephthalat, Polystyrene, Polyurethan, Polycarbonat, Ethylen-Propylen-Dien-Kautschuk (EPDM), oder fluorierte geschäumte Polymere, wie vorzugsweise Fluorkautschuk (FKM) nach DIN ISO 1629 und Fluorkautschuck nach ASTM D 1418, Polytetrafluorethylen (PTFE) oder anderer geschäumte teil- oder per-fluorierte Kohlenwasserstoffe auf Basis von Vinyliden(di)fluorid oder Mischungen dieser geschäumte Polymeren. Als geschäumte Polymeren werden vorzugsweise Polystyrol, Polyethylen oder Polypropylen eingesetzt. Die Herstellung von geschäumten Polymeren ist aus dem Stand der Technik bekannt und erfolgt daher nach bekannten Verfahren. Besonders bevorzugt besteht die geschäumte Polymerschicht aus geschäumtem Polyethylen, geschäumtem Polyethylen, geschäumtem Polypropylen oder geschäumtem Polypropylen.

Vorzugsweise weist der geschäumte Polymer eine Dichte von 45 bis 450 kg/m³.Besonders bevorzugt 100 kg/ m³ bis 250 kg/ m³.

Vorzugsweise besitzt die geschäumte Polymerschicht eine runde Form um im Wesentlichen passgenau auf das Gitter angepasst zu sein. Vorzugsweise ist der Durchmesser der geschäumten Polymerschicht 2 cm bis 10 cm. Besonders bevorzugt ist der Durchmesser der geschäumten Polymerschicht 6.6 cm +/- 0,2 cm. Vorzugsweise besitzt die geschäumte Polymerschicht eine Dicke von 0.2 mm bis 5 mm. Besonders bevorzugt besitzt die geschäumte Polymerschicht eine Dicke von 3 mm +/- 0,15 mm.

Auf die geschäumte Polymerschicht wird eine weitere Polymerschicht aufgebracht. Diese Polymerschicht besteht vorzugsweise aus Polytetrafluorethylen (PTFE). Es können aber auch andere Polymere verwendet werden. Diese Polymere müssen die Eigenschaft aufweisen, die geschäumte Polymerschicht gegenüber dem Behälterinhalt abzutrennen und wirken daher als Dichtung.

Vorzugsweise besitzt die weitere Polymerschicht eine runde Form um im Wesentlichen passgenau auf die geschäumte Polymerschicht angepasst werden zu können. Vorzugsweise ist der Durchmesser der weiteren Polymerschicht 2 cm bis 10 cm. Besonders bevorzugt ist der Durchmesser der weiteren Polymerschicht 6.6 cm +/- 0,2 cm. Vorzugsweise besitzt die Polymerschicht eine Dicke von 0.01 mm bis 4 mm. Besonders bevorzugt besitzt die weitere Polymerschicht eine Dicke von 0,5 mm +/- 0,025 mm. Die Polymerschicht kann durch Auflegen mit der geschäumten Polymerschicht in Kontakt gebracht werden und nicht weiter befestigt werden. Vorzugsweise wird die weitere Polymerschicht an der geschäumten Polymerschicht befestigt.

Vorzugsweise wird das geschäumte Polymer und die weitere Polymerschicht mittels eines Klebers verbunden.

Als Kleber werden vorzugsweise Kleber auf Basis von Cyanacrylate, Methylmethacrylate, ungesättigte Polyester, Epoxidharze, Phenolharze, Polyimide, Polysulfide, Bismaleimide und 1-Komponenten- und 2-Komponenten kondensationsvernetzende Silikone eingesetzt.

Die geschäumte Polymerschicht und die weitere Polymerschicht werden vorzugsweise als Komposit eingesetzt. Vorzugsweise wird das Komposit durch Laminierung der geschäumten Polymerschicht und der weiteren Polymerschicht in Gegenwart eines Klebers hergestellt. Besonders bevorzugt wird als Kleber ein Cyanacrylatkleber verwendet.

Das Komposit wird vorzugsweise auf das Gitter aufgelegt.

Zwischen der Behälteröffnung und der Polymerschicht kann eine Dichtung oder ein Dichtring aufgelegt werden. Die Dichtung besteht vorzugsweise aus Polyethylen. Vorzugsweise besitzt die Dichtung einen Durchmesser, der im Wesentlichen mit dem Durchmesser der weiteren Polymerschicht übereinstimmt. Vorzugsweise besitzt die Dichtung eine Dicke, die im Wesentlichen mit der Dicke der weiteren Polymerschicht übereinstimmt. Diese Dichtung wird vorzugsweise ebenfalls durch einen Kleber an der weiteren Polymerschicht fixiert. Ebenso könnte die Fixierung der Dichtung auf der Polymerschicht und der Behälteröffnung, insbesondere des Behälterrandes, durch die mechanische Kraft, die beim Verschließen der Behälteröffnung mit der Kappe wirkt, also durch Einklemmen der Dichtung, erfolgen. Bevorzugt wird keine Dichtung zwischen der Behälteröffnung und der Polymerschicht eingefügt. Bevorzugt bildet die Polymerschicht die Verschlussschicht der Behälteröffnung. Vorzugsweise dient die Polymerschicht als Dichtung.

Vorzugsweise erfolgt die Fixierung der geschäumten Polymerschicht, der weiteren Polymerschicht und des Gitters auf der Behälteröffnung durch Verschließen des Behälters mit der Kappe.

Vorzugsweise erfolgt das Verschließen des Behälters mit der erfindungsgemäßen Kappe mit einem maximalen Anzugsdrehmoment M, wobei für das maximale Anzugsdrehmoment M vorzugsweise 4 Nm ≤ M ≤ 8 Nm, besonders bevorzugt 5 Nm ≤ M ≤ 7 Nm, gilt.

Mit Hilfe der erfindungsgemäßen Kappe können Drücke ≥ 1,2 bar abgeführt werden.

Im Folgenden wird die Erfindung ohne Beschränkung des allgemeinen Erfindungsgedankens unter Bezugnahme auf die Figuren näher erläutert.

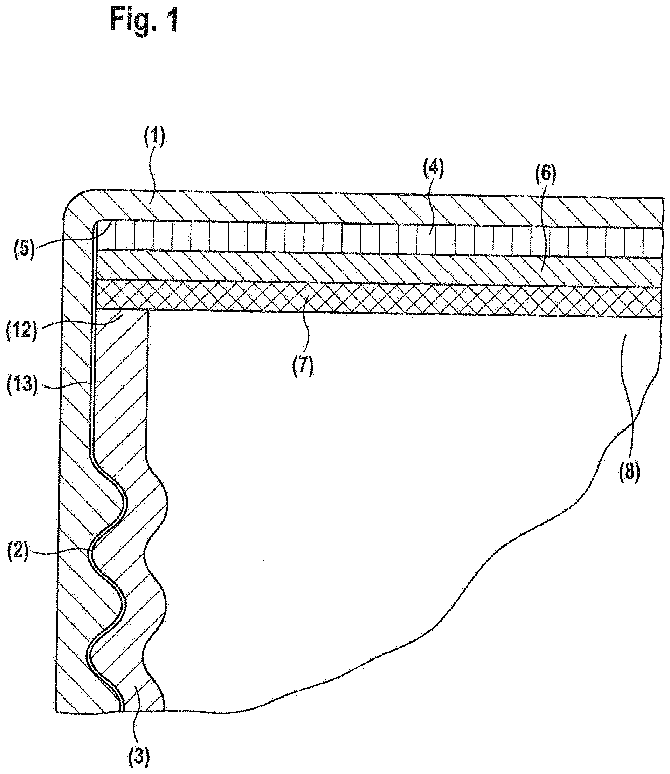

Figur 1 zeigt einen allgemeinen Aufbau der erfindungsgemäßen Kappe.

Figur 1 zeigt dabei eine erfindungsgemäße Kappe (1) mit Schraubgewinde (2) zum Verschließen eines Behälters (3), umfassend zumindest ein Gitter (4), dass in der Kappe auf die Kappeninnenwand (5) aufgebracht ist, und mindestens eine geschäumte Polymerschicht (6), welche auf das Gitter (4) aufgebracht ist und mindestens eine weitere Polymerschicht (7), die auf die geschäumte Polymerschicht (6) aufgebracht ist und die die Behälteröffnung (8) verschließt.

Durch Anpressen der Kappe (1) mit dem Gitter (4), dem geschäumten Polymeren (6) und der weiteren Polymerschicht (7) wird vorzugsweise der Behälter (3) verschlossen.

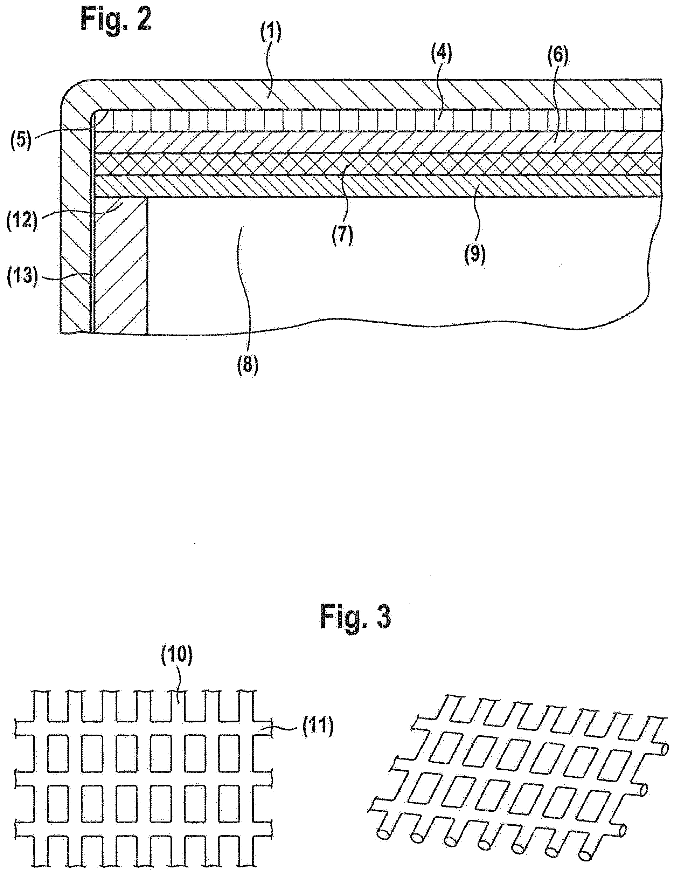

Figur 2 zeigt eine weitere erfindungsgemäße Ausführungsform, bei der eine Dichtung (9) eingesetzt wird, die Behälteröffnung (8) am Rand (12) der Öffnung zusätzlich abdichtet. Bei dieser Ausführungsform wird die Polymerschicht (7) auf die Dichtung (9) aufgelegt. Vorzugsweise wird die Polymerschicht (7) und die Dichtung (9) miteinander verbunden. Dies geschieht vorzugsweise durch verkleben.

Durch den Druck kann sich die geschäumte Polymerschicht (6) in die offenen Bereiche des Gitters (4) bewegen. Die weitere Polymerschicht (7) folgt der Bewegung der geschäumten Polymerschicht (6) und gibt dadurch Bereiche am Rand (12) der Flaschenöffnung frei, die eine Druckentlastung über den Spalt (13) zwischen Behälteröffnung und Kappe ermöglichen.

Figur 3 zeigt das Gitter (4) mit den Gitterstreben (10) und (11).

Durch die Erfindung ist es möglich mit extrem geringem Aufwand und ohne jegliche strukturelle Veränderung der Kappe, nur durch Einlegen eines Gitters und zweier voneinander unterschiedlicher Polymeren oder eines Komposits dieser Polymeren, eine Überdruckverhinderung einzubauen. Strukturelle Maßnahmen an der Kappe sind nicht nötig durchzuführen, so dass erhebliche Kosten und Ressourcen eingespart werden.

Die Konstruktion erlaubt eine sichere Vermeidung von Überdruck, ohne zu irgendeinem Zeitpunkt die Integrität der Verpackung aufzugeben.

### Beispiele

### Beispiel 1

In eine handelsübliche Verschluss-Kappe von 6.6 cm Durchmesser mit Schraubgewinde, welche aus Polyethylen gefertigt war, wurde ein rundes Gitter aus Polyethylen (Durchmesser: 6.6 cm, Durchmesser der Gitterstreben: 2 mm, Abstand der Gitterstreben im quadratischen Gitter: 10 mm ) und ein Komposit aus geschäumtem Polyethylen (PE) (Dicke: 3 mm, Dichte: 194 kg/m³, Durchmesser: 6.6 cm) und einer Polytetrafluorethylenschicht (PTFE) mit einer Dicke von 0.5 mm (Durchmesser: 6.6 cm), eingelegt. Die Kappe trug außerdem einen Sicherungsring zur Indikation der Unversehrtheit vor Öffnung.

Danach wurde eine leere Aluminiumflasche mit einem Volumen von 6 I mit der obigen Kappe mit einem Anzugsdrehmoment von 6.7 Nm verschlossen und der Flascheninnendruck langsam , durch Zugabe von Druckluft, auf 1,5 bar erhöht. Der Flascheninnendruck wurde durch ein in der Flasche integriertes Manometer gemessen. Bei Erreichen von 1,5 bar wurde eine Druckentlastung festgestellt; durch den Druck konnte sich die geschäumte Polymerschicht (6) in die offenen Bereiche des Gitters (Gitters) bewegen. Die Polytetrafluorethylenschicht (7) folgt der Bewegung der geschäumten Polymerschicht (6) und gibt dadurch Bereiche am Rand (12) der Flaschenöffnung frei, die eine Druckentlastung über den Spalt (13) zwischen Behälteröffnung und Kappe ermöglichen. Der Druck nahm innerhalb von 15 Minuten von 1,5 bar auf 1,2 bar ab.

Ist der Druck entsprechend entlastet schließen sich die Polymerschichten wieder.

### Beispiel 2

In eine handelsübliche Verschluss-Kappe von 6.6 cm Durchmesser mit Schraubgewinde, welche aus Polyethylen gefertigt war, wurde ein rundes Gitter aus Polyethylen (Durchmesser: 6.6 cm, Durchmesser der Gitterstreben: 2 mm, Abstand der Gitterstreben im quadratischen Gitter: 10 mm ) und ein Komposit aus geschäumtem Polyethylen (PE) (Dicke: 3 mm, Dichte: 194 kg/m³, Durchmesser: 6.6 cm) und einer Polytetrafluorethylenschicht (PTFE) mit einer Dicke von 0.5 mm (Durchmesser: 6.6 cm), eingelegt. Die Kappe trug außerdem einen Sicherungsring zur Indikation der Unversehrtheit vor Öffnung.

Danach wurde eine Aluminiumflasche mit einem Volumen von 6 I mit der obigen Kappe mit einem Anzugsdrehmoment von 6.7 Nm verschlossen. Die Flasche enthielt 6 kg Dimethyldicarbonat (Velcorin, Lanxesss Deutschland GmbH, Charge CHWV5547, Reinheit > 99.8%). Nach Befüllen und Verschließen wurde die Flasche 12 Monate bei Raumtemperatur gelagert. Danach wurde die Flasche 6 Monate bei 50°C gelagert. Danach wurde die Flasche geöffnet. Beim Öffnen war die Flasche unversehrt und es konnte kein Druckaufbau ≥ 1,2 bar bemerkt werden. Die Reinheit des DMDC betrug nur noch 90%. Das bei der partiellen Zersetzung des DMDC gebildete CO₂ konnte durch die erfindungsgemäße Kappe entweichen.

Der Versuch wurde mit einer 3 I Glasflasche, enthaltend 3 kg Dimethyldicarbonat, wiederholt. Auch in diesem Fall konnte bei Öffnung kein Druckaufbau ≥ 1,2 bar beobachtet werden und die Flasche blieb unversehrt.

### Vergleichsbeispiel 1

Eine Aluminiumflasche mit einem Volumen von 6 I wurde mit einer handelsüblichen Kappe mit Schraubgewinde mit einem Drehmoment von 6.7 Nm verschlossen; mittels Druckluft wurde ein Druck von 1,5 bar erzeugt und eine eventuelle Druckabnahme über einen Zeitraum von 3 Tagen beobachtet. Der Flascheninnendruck wurde durch ein in der Flasche integriertes Manometer gemessen. Es wurde keine Druckentlastung gemessen.

### Vergleichsbeispiel 2

Die Kappe mit eingelegtem Komposit umfassend geschäumtes Polyethylen (PE) (6) und Polytetrafluorethylenschicht (PTFE) (7), aus Beispiel 1, jedoch ohne das zusätzliche Gitter (4), wurde verwendet um eine 30 Liter Glas-Flasche, gefüllt mit 3 Liter Dimethyldicarbonat und 1 Liter Wasser, mit einem Drehmoment von 6.7 Nm zu verschließen. Nach 24 h Druckaufbau zerplatzte das Glas bei einem Druck von 10 bar.

## Patentansprüche

1. Kappe (1) mit Schraubgewinde (2) zum Verschließen eines Behälters (3), umfassend zumindest ein Gitter (4), das in der Kappe auf die Kappeninnenwand (5) aufgebracht ist, und mindestens eine geschäumte Polymerschicht (6), welche auf das Gitter (4) aufgebracht ist und mindestens eine weitere Polymerschicht (7), die auf der geschäumten Polymerschicht (6) aufgebracht ist und die eine Behälteröffnung (8) des Behälters (3) verschließen kann.

2. Kappe gemäß Anspruch 1, **dadurch gekennzeichnet, dass** im Gitter (4), der im Wesentlichen runden Gitterstreben umfasst, die Gitterstreben einen Durchmesser von 0.2 mm bis 5 mm haben

3. Kappe gemäß einem der Ansprüche 1 bis 2, **dadurch gekennzeichnet, dass** die geschäumte Polymerschicht (6) mindestens ein Polymer ausgewählt aus der Gruppe Polypropylen, Polyethylen, High Density Polyethylen (HDPE), Low Density Polyethylen (LDPE), High Density Polypropylen (HDPP), Low Density Polypropylen (LDPP), Polyethylenterephthalat, Polystyrene, Polyurethan, Polycarbonat, Ethylen-Propylen-Dien-Kautschuk (EPDM), oder fluorierte geschäumte Polymere, wie vorzugsweise Fluorkautschuk (FKM) nach DIN ISO 1629 und Fluorkautschuck nach ASTM D 1418, Polytetrafluorethylen (PTFE) oder anderer geschäumte teil- oder per-fluorierte Kohlenwasserstoffe auf Basis von Vinyliden(di)fluorid oder Mischungen dieser geschäumte Polymeren, umfasst.

4. Kappe gemäß einem der Ansprüche 1 bis 3, **dadurch gekennzeichnet, dass** die geschäumte Polymerschicht (6) eine Dichte von 45 bis 450 kg/m³ aufweist.

5. Kappe gemäß einem der Ansprüche 1 bis 4, **dadurch gekennzeichnet, dass** die Polymerschicht (7) aus Polytetrafluorethylen besteht.

6. Kappe gemäß einem der Ansprüche 1 bis 5, **dadurch gekennzeichnet, dass** die geschäumte Polymerschicht (6) mit der Polymerschicht (7) mit Hilfe eines Klebers verbunden wird.

7. Kappe gemäß Anspruch 6, **dadurch gekennzeichnet, dass** Kleber auf Basis von Cyanacrylate, Methylmethacrylate, ungesättigte Polyester, Epoxidharze, Phenolharze, Polyimide, Polysulfide, Bismaleimide und 1-Komponenten- und 2-Komponenten Kondensationsvernetzende Silikone und Glutinleim oder Mischungen dieser Kleber eingesetzt werden.

8. Kappe gemäß einem der Ansprüche 1 bis 7, **dadurch gekennzeichnet, dass** das Gitter (4) aus Polypropylen (PP) oder Polyethylen (PE) oder Mischungen dieser Polymeren besteht.

9. Kappe gemäß einem der Ansprüche 1 bis 8, **dadurch gekennzeichnet, dass** als Dichtung auf einen Rand (12) der Behälteröffnung (8) eine Polyethylendichtung eingesetzt wird.

10. Kappe gemäß einem der Ansprüche 1 bis 9, **dadurch gekennzeichnet, dass** die Kappe (1) aus Polyethylenterephthalat (PET), Polypropylen (PP) oder Polyethylen (PE) oder Mischungen dieser Polymeren besteht.

11. Behälter (3) umfassend die Kappe gemäß mindestens einem Anspruch 1 bis 10

12. Behälter gemäß Anspruch 11, **dadurch gekennzeichnet, dass** der Behälter (3) zumindest teilweise mit flüssigem Dimethyldicarbonat gefüllt ist.

13. Behälter gemäß Anspruch 11 oder 12, **dadurch gekennzeichnet, dass** dieser Behälter (3) mit einem maximalen Anzugsdrehmoment M von 4 Nm ≤ M ≤ 8 Nm durch die Kappe gemäß Anspruch 1 bis 10 verschlossen ist.

14. Behälter gemäß einem der Ansprüche 10 bis 13, **dadurch gekennzeichnet, dass** der Behälter (3) einen Aluminiumgehalt von ≥ 95 Gew.% bezogen auf das Gesamtgewicht des Behälters ohne Kappe aufweist.

15. Verwendung der Kappe (1) gemäß einem der Ansprüche 1 bis 10 zum Verschließen von Behältern (3).

## Claims

1. Cap (1) with screw thread (2) for closing a container (3), comprising at least one mesh (4) applied in the cap to the internal wall (5) of the cap, and comprising at least one foamed polymer layer (6) applied to the mesh (4) and comprising at least one further polymer layer (7) which has been applied on the foamed polymer layer (6) and which can close a container aperture (8) of the container (3).

2. Cap according to Claim 1, **characterized in that** within the mesh (4) which comprises mesh filaments, which are in essence round, the diameter of the mesh filaments is 0.2 mm to 5 mm.

3. Cap according to either of Claims 1 and 2, **characterized in that** the foamed polymer layer (6) comprises at least one polymer selected from the group of polypropylene, polyethylene, high-density polyethylene (HDPE), low-density polyethylene (LDPE), high-density polypropylene (HDPP), low-density polypropylene (LDPP), polyethylene terephthalate, polystyrenes, polyurethane, polycarbonate, ethylenepropylene-diene rubber (EPDM), or fluorinated foamed polymers, such as preferably fluororubber (FKM) in accordance with DIN ISO 1629 and fluororubber in accordance with ASTM D 1418, polytetrafluoroethylene (PTFE), or other foamed partially fluorinated or perfluorinated hydrocarbons based on vinylidene (di)fluoride or mixtures of these foamed polymers.

4. Cap according to any of Claims 1 to 3, **characterized in that** the density of the foamed polymer layer (6) is 45 to 450 kg/m³.

5. Cap according to any of Claims 1 to 4, **characterized in that** the polymer layer (7) consists of polytetrafluoroethylene.

6. Cap according to any of Claims 1 to 5, **characterized in that** an adhesive is used to connect the foamed polymer layer (6) to the polymer layer (7).

7. Cap according to Claim 6, **characterized in that** adhesives used are based on cyanoacrylates, methylmethacrylates, unsaturated polyesters, epoxy resins, phenolic resins, polyimides, polysulfides, bismaleimides and 1-component and 2-component condensation-crosslinking silicones and glutine glue or mixtures of these adhesives.

8. Cap according to any of Claims 1 to 7, **characterized in that** the mesh (4) consists of polypropylene (PP) or polyethylene (PE) or mixtures of these polymers.

9. Cap according to any of Claims 1 to 8, **characterized in that** a polyethylene seal is used as a seal on an edge (12) of the container aperture (8).

10. Cap according to any of Claims 1 to 9, **characterized in that** the cap (1) consists of polyethylene terephthalate (PET), polypropylene (PP) or polyethylene (PE) or mixtures of these polymers.

11. Container (3) comprising the cap according to at least one of Claims 1 to 10.

12. Container according to Claim 11, **characterized in that** the container (3) has been at least partially filled with liquid dimethyldicarbonate.

13. Container according to Claim 11 or 12, **characterized in that** the maximal tightening torque M used to close this container (3) with the cap according to Claims 1 to 10 is 4 Nm ≤ M ≤ 8 Nm.

14. Container according to any of Claims 10 to 13, **characterized in that** the aluminium content of the container (3) is ≥ 95% by weight, based on the total weight of the container without cap.

15. Use of the cap (1) according to any of Claims 1 to 10 for closing of containers (3).

## Revendications

1. Capuchon (1) comportant un filetage (2) pour obturer un récipient (3), comprenant au moins un treillis (4) qui est appliqué dans le capuchon sur la paroi intérieure (5) du capuchon, et au moins une couche polymère expansée (6) qui est appliquée sur le treillis (4) et au moins une autre couche polymère (7) qui est appliquée sur la couche polymère expansée (6) et qui peut obturer un orifice (8) du récipient (3).

2. Capuchon selon la revendication 1, **caractérisé en ce que**, dans le treillis (4) qui comprend des entretoises en treillis essentiellement rondes, les entretoises en treillis ont un diamètre de 0,2 mm à 5 mm.

3. Capuchon selon l'une des revendications 1 à 2, **caractérisé en ce que** la couche polymère expansée (6) comprend au moins un polymère choisi dans le groupe polypropylène, polyéthylène, polyéthylène haute densité (PEHD), polyéthylène basse densité (PEBD), polypropylène haute densité (PPHD), polypropylène basse densité (PPBD), poly(téréphtalate d'éthylène), polystyrènes, polyuréthane, polycarbonate, caoutchouc éthylène-propylène-diène (EPDM) ou les polymères expansés fluorés, tels que de préférence le caoutchouc fluoré (FKM) selon DIN ISO 1629 et le caoutchouc fluoré selon ASTM D 1418, polytétrafluoréthylène (PTFE) ou d'autres hydrocarbures expansés partiellement fluorés ou perfluorés à base de (di)fluorure de vinylidène, ou les mélanges de ces polymères expansés.

4. Capuchon selon l'une des revendications 1 à 3, **caractérisé en ce que** la couche polymère expansée (6) présente une masse volumique de 45 à 450 kg/m³.

5. Capuchon selon l'une des revendications 1 à 4, **caractérisé en ce que** la couche polymère (7) est constituée de polytétrafluoréthylène.

6. Capuchon selon l'une des revendications 1 à 5, **caractérisé en ce que** la couche polymère expansée (6) est assemblée à la couche polymère (7) à l'aide d'une colle.

7. Capuchon selon la revendication 6, **caractérisé en ce qu'**on utilise des colles à base de cyanoacrylates, de méthacrylates de méthyle, de polyesters insaturés, de résines époxydes, de résines phénoliques, de polyimides, de polysulfures, de bismaléimides et de silicones à 1 et 2 composants réticulables par condensation, et une colle animale ou des mélanges de ces colles.

8. Capuchon selon l'une des revendications 1 à 7, **caractérisé en ce que** le treillis (4) est constitué de polypropylène (PP) ou de polyéthylène (PE) ou de mélanges de ces polymères.

9. Capuchon selon l'une des revendications 1 à 8, **caractérisé en ce qu'**on utilise en tant qu'étanchéité sur un bord (12) de l'orifice (8) du récipient une étanchéité à base de polyéthylène.

10. Capuchon selon l'une des revendications 1 à 9, **caractérisé en ce que** le capuchon (1) est constitué de poly(téréphtalate d'éthylène) (PET), de polypropylène (PP) ou de polyéthylène (PE) ou de mélanges de ces polymères.

11. Récipient (3) comprenant le capuchon selon au moins l'une des revendications 1 à 10.

12. Récipient selon la revendication 11, **caractérisé en ce que** le récipient (3) est au moins partiellement rempli de dicarbonate de diméthyle liquide.

13. Récipient selon la revendication 11 ou 12, **caractérisé en ce que** ce récipient (3) est obturé avec un couple de serrage maximal M de 4 Nm ≤ M ≤ 8 Nm à l'aide du capuchon selon l'une des revendications 1 à 10.

14. Récipient selon l'une des revendications 10 à 13, **caractérisé en ce que** le récipient (3) présente une teneur en aluminium ≥ 95 % en poids par rapport au poids total du récipient sans capuchon.

15. Utilisation du capuchon (1) selon l'une des revendications 1 à 10 pour obturer des récipients (3).
